# EUROPÄISCHE PATENTANMELDUNG

(11) **EP 2 193 897 A1**
(43) Veröffentlichungstag der Anmeldung: **09.06.2010**
(21) Anmeldenummer: 09177854.8
(22) Anmeldetag: 03.12.2009
(51) Int. Cl.: B27D 1/00, B32B 21/08, B32B 21/14, B32B 23/00

(54) **Verbundwerkstoff auf Basis eines Holzfurniers und Verfahren zur Herstellung eines solchen Verbundwerkstoffs**

(30) Priorität: 04.12.2008 AT 18922008
(71) Anmelder: Lisa Dräxlmaier GmbH, 84137 Vilsbiburg (DE)
(72) Erfinder: Veigel, Stefan, 2100, Leobendorf (AT); Müller, Ulrich, 1020, Wien (AT)
(74) Vertreter: HOFFMANN EITLE

(57) **Zusammenfassung**

Beschrieben wird ein Holzfurnier (3), welches durch die Beschichtung mit einem Cellulosefilm (1) auch um kleine Biegeradien rissfrei gebogen werden kann, sowie Verfahren zur Herstellung eines solchen Werkstoffes. Das Furnier (3) ist vorzugsweise ein wertvolles Laubholzfurnier mit einer Dicke zwischen 0,2 und 1,5 mm. Ein hochfester und transparenter Cellulosefilm (1), dessen Dicke 0,01-0,4 mm beträgt, wird mit Hilfe eines Klebstoffes (vorzugsweise auf Basis von Epoxid- oder Polyesterharz) auf das Furnier (3) aufgeklebt und so schubsteif mit diesem verbunden. Durch die Verbindung des Cellulosefilms (1) mit dem Holzfurnier (3) entsteht ein Verbundwerkstoff, welcher anschließend in einem Arbeitsschritt zwei- oder drei-dimensional gebogen und auf ein Trägermaterial aufgeleimt werden kann. Da der Cellulosefilm aufgrund seiner hohen Festigkeit und Steifigkeit als Zugband wirkt, behindert dieser die Verlängerung des Holzes auf der auf Zug beanspruchten Seite. Rißbildungen an der Außenseite des Biegeteils (4) werden dadurch verhindert. Der erfindungsgemäße Verbundwerkstoff eignet sich somit auch zum Furnieren kritischer (z.B. stark gekrümmter) Werkstücke.

## Beschreibung

Die Erfindung betrifft einen Verbundwerkstoff auf Basis eines Holzfurniers.

In der Vergangenheit wurde schon versucht, Holz durch Biegen, also einen spanlosen Prozess, in die gewünschte Form zu bringen. Dabei traten allerdings einige Probleme auf. Beispielsweise bewegten sich die gebogenen Teile aufgrund der Elastizität des Holzes nach dem Biegevorgang wieder in ihre ursprüngliche Form zurück. Außerdem erkannte man, dass dem kleinstmöglichen Biegeradius von Holzbauteilen Grenzen gesetzt sind, deren Überschreitung unweigerlich zum Bruch des Holzes führte. Trotz der Anwendung verschiedener Vorbehandlungsverfahren zum Plastifizieren der Holzsubstanz und aller Vorsicht beim Biegen trat häufig ein Bruch des Holzes auf der Zugseite auf.

Allgemein kann das spanlose Formen von Vollholz (Biegen) in folgende Verfahrensschritte gegliedert werden:
- Plastifizieren
- Umformen (Biegen)
- Stabilisieren (Fixieren in der Form).

Besonders bei engen (kleinen) Biegeradien kommt der Entlastung der kritischen Zugzone im Holz große Bedeutung zu. Eine solche Entlastung kann durch Aufbringen eines faserparallelen Stauchdruckes an den Enden des Biegeteiles oder durch die Verwendung eines Zug- oder Biegebandes, das der Aufnahme der Zugkräfte dient, erreicht werden. Die hier beschriebene Verfahrensweise basiert auf dem zuletzt genannten Zugband-Prinzip, das im 19. Jahrhundert von Michael Thonet, einem deutschen Tischlermeister, erfunden wurde.

Aufgrund der begrenzten Bruchdehnung des Holzes bei Zugbeanspruchung lässt sich lufttrockenes Holz ohne besondere Vorbehandlung nur in beschränktem Maße biegen. Beim Biegevorgang kommt es auf der unter Zug stehenden Seite des Biegeteils zu einer Dehnung in Längsrichtung, wenn diese nicht durch äußere Maßnahmen unterbunden wird. KOLLMANN (1936) zeigte für den Fall einer kreisförmigen Biegung, dass ein zerstörungsfreies Verformen nur möglich ist, wenn das Verhältnis von Biegeteildicke (d) zum doppelten Biegeradius (2r) kleiner ist als die Bruchdehnung des Holzes bei Zugbeanspruchung (ε_{z}). Letztere kann durch eine Vorbehandlung wie Kochen oder Dämpfen erhöht werden, sodass auch das Verhältnis d/r größer werden kann. Das Verformungsverhältnis d/r ist eine häufig verwendete Größe zur Beurteilung der Leistungsfähigkeit einer Vorbehandlung oder eines Biegeverfahrens. So kann beispielsweise gedämpftes Holz nach KOLLMANN (1955) bis zu einem Verhältnis von d/r ∼ 1/30 meist ohne zusätzliche Vorkehrungen gebogen werden, während bei nicht vorbehandeltem oder lufttrockenem Holz nur Verformungsverhältnisse d/r < 1/50 möglich sind. Bezogen auf ein Furnier von 0,5 mm Dicke ergibt sich daraus ein kleinstmöglicher Biegeradius von 15 mm für vorbehandeltes und 25 mm für nicht vorbehandeltes Holz, wobei es sich hierbei nur um grobe Richtwerte handelt.

Mit zunehmendem Verhältnis von d/r steigt auch die Wahrscheinlichkeit für das Auftreten von Brüchen in der Zugzone des Stabes, so dass Thonet als erster die Idee hatte, die Längsdehnung der Holzfasern möglichst vollständig zu verhindern. Erreicht wurde dies durch ein Stahlband (Zugband), das an der auf Zug beanspruchten Seite des Biegeteils angebracht wurde, sodass sich das Holz nur mehr um den geringen Betrag der Dehnung des Stahlbandes verlängern konnte. Damit ein Biegevorgang überhaupt möglich ist, muss der gesamte Holzkörper gestaucht werden, wobei die Stauchung mit zunehmendem Abstand vom Zugband größer wird. Die neutrale Zone (Bereich in dem weder Druck- noch Zugspannungen wirken) verschiebt sich dadurch in die Nähe des Zugbandes (KOLLMANN, 1955).

In der Möbelindustrie wie auch in anderen Industriezweigen werden Furniere aus Holz schon seit langem zum Erzeugen dekorativer Holzoberflächen eingesetzt. Dabei tritt häufig der Fall ein, dass der zu furnierende Bauteil keine ebene Oberfläche, sondern eine mehr oder weniger stark gekrümmte Form aufweist. Daher muss sich auch das Furnier der Bauteiloberfläche anpassen und zwei-dimensional oder gar drei-dimensional verformt werden. Derartige Umformprozesse haben vor allem in der Möbel- und Automobilindustrie (Armaturenbrett), im Ladenbau, sowie in der Innenausstattung von Flugzeugen, Booten und Bahnwaggons eine große Bedeutung. Beim Beschichten einer mehrdimensional geformten Fläche mit einem Holzfurnier erfährt dieses unterschiedliche Beanspruchungen, welche die mögliche Form begrenzen. Weist die Werkstückoberfläche zu enge (kleine) Krümmungsradien auf, so kommt es in den am stärksten beanspruchten Bereichen trotz einer Vorbehandlung der Furniere zu einer Rissbildung. Besonders problematisch ist das drei-dimensionale Biegen von Holzfurnieren, beispielsweise im Bereich von Werkstücken.

Das Unternehmen REHOLZ® GmbH entwickelte in diesem Zusammenhang ein Verfahren zum Herstellen drei-dimensional stark verformbarer Furniere (3D-Furniere). Verwendung finden diese Furniere beim Herstellen von drei-dimensionalen Lagenholzformteilen, sowie beim Beschichten von profilierten Schmalflächen und drei-dimensionalen Breitflächen. Die 3D-Furniere können ähnlich dem Tiefziehen von Blechen verarbeitet werden, d.h. es werden zunächst ebene Zuschnitte hergestellt, die anschließend durch Flächenverzug zu Hohlkörpern umgeformt werden. Das Verfahren beruht im Wesentlichen auf einer Stauchung des Holzgefüges. Dazu wird das Holz in eine spezielle Vorrichtung eingespannt (Verhindern des Ausknickens) und ein faserparalleler Stauchdruck aufgebracht. Die auf diese Weise vorbehandelten Furniere können dann einlagig auf ein drei-dimensional geformtes Trägermaterial aufgeleimt oder in mehreren Lagen übereinander gelegt und dann formverleimt werden. Der größte Nachteil dieses Verfahrens liegt in der aufwändigen und damit teuren Vorbehandlung des Holzes.

Eine wissenschaftliche Arbeit, die sich mit dem Verhalten von Holzfurnieren beim Verformen beschäftigt, findet sich bei WAGENFÜHR et al. (2006). Demnach führt vor allem das stark anisotrope Materialverhalten von Holz zu Problemen bei der zwei- und drei-dimensionalen Formgebung. Es wird der Schluss gezogen, dass sich die besten Biegeergebnisse erzielen lassen, wenn Mikrorisse im Furnier erzeugt werden, die makroskopisch nicht sichtbar sind, die jedoch eine Verschiebung von Zellen oder einzelner Zellwandbereiche gegeneinander ermöglichen. Die Mikrorisse werden durch eine Druckbehandlung (ca. 5 MPa) der Furniere bei Temperaturen zwischen 130 und 160 °C erzeugt. Durch diese Behandlung kommt es neben der Mikrorissbildung auch zu einer Kompression der Holzzellen, was den nachfolgenden Biegevorgang erleichtert. Die Autoren gehen davon aus, dass ohne Zerstören der natürlich gewachsenen Zellstruktur keine plastische Deformation des Holzes und somit auch keine Formgebung möglich ist. Neben dem in dieser Studie beschriebenen Ansatz gibt es weitere Verfahren, um das Reißen der Furniere beim Biegen um Kanten oder Ecken zu vermeiden. Zum einen kann, wie bereits erwähnt, durch verschiedene Vorbehandlungen (Dämpfen, Kochen, Ammoniakbehandlung, etc.) ein plastifizierender Effekt erzielt werden. Dabei kommt es zu einem Erweichen des Lignins in der Mittellamelle des Holzes, wodurch ein Abgleiten einzelner Zellen gegeneinander möglich wird. Häufig werden Furniere vor dem Biegen gedämpft, womit allerdings in vielen Fällen eine (erwünschte oder unerwünschte) Verfärbung des Holzes verbunden ist.

Wird Holz mit gasförmigem Ammoniak behandelt, so lässt sich ebenfalls ein Plastifizierungseffekt erzielen. Bereits vor mehr als 40 Jahren stellte Conrad SCHUERCH in seinen Versuchen fest, dass ammoniakplastifiziertes Holz nach einem Wiederbefeuchten eine erhöhte Formstabilität aufwies. In der US-A-3,282,313 wird das Weichmachen von Holz mit Ammoniak zu Biegezwecken, für das Oberflächenprägen und zum Verpressen beschrieben. Als Nachteile der Ammoniakbehandlung von Holz können nach BARISKA (1974) das Auftreten von Rissen während der Behandlung und der Verbleib von Ammoniak im Holz gesehen werden. Aus größeren Holzkörpern ist Ammoniak demnach kaum mehr zu entfernen. Darüber hinaus kommt es bei der Ammoniakbehandlung ähnlich wie beim Dämpfen häufig zu unerwünschten Verfärbungen des Holzes.

Da das klassische Thonet-Verfahren nicht für das Biegen einzelner Furniere geeignet ist, wurde bereits der Versuch unternommen, das Verfahren für Furniere zu adaptieren. Es wurden beispielsweise verschiedene Vliese oder Gewebe auf die Rückseite des Furniers aufgeklebt, um so ein Reißen beim Überfurnieren gekrümmter Werkstücke zu verhindern. Die Ergebnisse waren meist unbefriedigend, da die Haftung der Vliese auf den Furnieren häufig unzureichend war und außerdem beim Furnieren einer Rundung die kritische Zugzone des Holzes (konvexe Seite) nicht entlastet wird, wenn sich die Verstärkung auf der Furnierrückseite befindet.

Der Erfindung liegt die Aufgabe zu Grunde, einen Verbundwerkstoff der eingangs genannten Gattung ebenso wie ein Verfahren zum Herstellen desselben zur Verfügung zu stellen, mit dem auch kleine Biegeradien des Furniers möglich sind.

Gelöst wird diese Aufgabe mit den Merkmalen des Anspruches 1.

Bevorzugte und vorteilhafte Ausgestaltungen der Erfindung sind Gegenstand der Unteransprüche.

Bei der vorliegenden Erfindung übernimmt ein dünner, hochfester (reißfester) Film, insbesondere ein Cellulosefilm, die Funktion des Zugbandes. Durch die Verwendung des Biopolymers Cellulose unterscheidet sich die Erfindung vom Stand der Technik, bei dem in der Regel Materialien wie Stahlbleche oder verschiedene Fasergelege (z.B. Glasfasern) zur Verstärkung der Furniere verwendet werden. Da jedoch auch bei der Verwendung derartiger Materialien das Ziel verfolgt wird, einen Bruch des Furniers während der Formgebung zu vermeiden, wird im Folgenden kurz auf einige bekannte Werkstoffe und Verfahren eingegangen. Es handelt sich dabei um Schichtverbunde (Laminate) aus einem oder mehreren Holzfurnieren und einer oder mehreren Lagen aus Metall oder einem anderen Verstärkungsmaterial.

Ein klarer Unterschied besteht auch gegenüber den Verfahren, bei denen die Beschichtung des Furniers zu rein dekorativen Zwecken erfolgt. Bei der Erfindung wird das Biegen von Furnieren um enge Krümmungsradien ermöglicht, was durch eine Verlagerung der auftretenden Zugspannungen vom Holz in einen aufkaschierten Cellulosefilm bewerkstelligt wird. Das Aufkleben des Cellulosefilms erfolgt daher primär aus mechanischen Gründen, eine etwaige dekorative Funktion ist zweitrangig. Das Beschichten eines Furniers mit einem als Zugband wirkenden Cellulosefilm stellt die eigentliche Innovation dar und steht somit im Zentrum der Erfindung. Eine ggf. durchgeführte, für das Holzbiegen gebräuchliche, Vorbehandlung der Furniere durch Dämpfen, etc. ist bei der Erfindung möglich.

Die grundlegende Idee, ein Zugband nicht nur für den Vorgang des eigentlichen Biegens zu verwenden, sondern dieses dauerhaft mit dem Furnier zu verbinden, ist bekannt. So beschreibt etwa die DE 43 05 611 A1 ein Verfahren zum Herstellen eines furnierten und gebogenen Verkleidungsteiles aus einem Holz/Metall-Laminat, der sich insbesondere für Innenausbauteile von Kraftfahrzeugen anwenden lässt. Bei dem bekannten Verfahren wird zunächst ein ebenes Blech mit einem Echtholzfurnier zu einem Halbzeug-Laminat verklebt und die Holzoberfläche anschließend endbehandelt. Danach werden aus dem Laminat ebene Zuschnitte der Verkleidungsteile hergestellt, die dann in die entsprechende Einbauform geformt werden. Der Nachteil des in der DE 43 05 611 A1 beschriebenen Verfahrens besteht darin, dass das Metallblech immer die nicht sichtbare Rückseite des Laminates bildet, sodass bei nach außen gewölbten Flächen das Blech auf Druck und das Holzfurnier auf Zug beansprucht wird. Die Funktion eines Zugbandes wird in diesem Fall nicht erfüllt.

Die US-A-3,423,276 beschreibt einen Werkstoff und ein Verfahren zum Herstellen dekorativer Verkleidungsteile für Armaturenbretter von Fahrzeugen. Vorrangiges Ziel der US-A-3,423,276 ist es, das Armaturenbrett einfach, schnell und kostengünstig mit einem Verkleidungsteil in Holzoptik zu versehen und so eine ansprechende Oberfläche zu erzielen. Beim Herstellen des Verkleidungsteiles wird auf die Rückseite einer dekorativen Deckschicht, die vorzugsweise aus einem hölzernen Material besteht, eine poröse, flexible Verstärkungsschicht aus einem Stoffgewebe aufgeklebt. Auf die Rückseite der Verstärkungsschicht wird ein drucksensitiver Klebstoff aufgetragen, sodass das entstandene Laminat auf dem Armaturenbrett aufgeklebt werden kann.

Eine Möglichkeit, ein Holzfurnier mit einer Kombination aus einem Metallblech und einem Fasermaterial zu verstärken wird in der US-A-5,264,062 aufgezeigt. Beschrieben wird hier ein Schichtverbund bestehend aus einem Metallblech (0,01-0,5 mm dick), das auf einer Seite mit einem 0,15-0,5 mm dicken Holzfurnier und auf der anderen Seite mit einer dünnen Schicht aus einem porösen Material wie z.B. einem geschäumten Kunstharz verklebt wird. Alternativ kann anstelle der porösen Schicht auch ein faserförmiges Material (Faservlies, Glasfasergewebe, Papier, etc.) verwendet werden. Dabei sollte das Flächengewicht des Fasermaterials zwischen 30 und 70 gm⁻² liegen. Nach dem Verbinden der einzelnen Schichten wird die Holzoberfläche lackiert und der Verbundwerkstoff in eine Spritzguss-Form eingebracht. Anschließend wird das Laminat mit einem flüssigen Polymer hinterspritzt, welches dann aushärtet und das Laminat in der gewünschten Form hält.

Ähnlich wie in der vorliegenden Erfindung wird in der EP 0 094 651 A2 ein Verfahren beschrieben, bei dem ein Holzfurnier mit einer dünnen Polyvinylalkohol-Folie beschichtet wird. Diese Folie ist weitgehend transparent und verleiht dem Verbundwerkstoff eine erhöhte Reißfestigkeit, so dass sich letzterer auch zum Furnieren von unebenen Flächen eignet. Es sollen auf diese Weise verschieden profilierte Gegenstände aus Vollholz oder Holzwerkstoffen furniert werden, ohne dass es an den kritischen Stellen zu einem Reißen des Furniers kommt. Im Vergleich zum erfindungsgemäß verwendeten Cellulosefilm hat die Polyvinylalkohol-Folie allerdings den Nachteil, Feuchtigkeit stark zu absorbieren, was bei hoher Luftfeuchtigkeit zu einem deutlichen Festigkeitsabfall führt.

Die vorliegende Erfindung unterscheidet sich von dem zuvor beschriebenen Stand der Technik dadurch, dass weder ein Metallblech noch ein faserförmiges Material für die Aufnahme der Zugkräfte zur Anwendung kommt. Es wird hier der neuartige Ansatz verfolgt, einen hochfesten und steifen Cellulosefilm als Zugband einzusetzen. Dieser wird fix mit dem Furnier verbunden (verklebt) und bietet gegenüber den meisten bisher verwendeten Materialien den entscheidenden Vorteil, in aufgeklebtem Zustand nahezu transparent zu sein. Dadurch ist es auch bei konvex geformten Bauteilen möglich, die Verstärkung auf der unter Zugspannung stehenden Vorderseite des Furniers, also der Sichtseite, anzubringen.

Für das Herstellen von im Rahmen der Erfindung verwendbaren Cellulosefilmen gibt es verschiedene Möglichkeiten. Eine detaillierte Beschreibung eines Herstellungsprozesses findet sich beispielsweise bei GINDL et al. (2006). Die endgültige Dicke der Cellulosefilme kann nahezu beliebig variiert werden und kann für die vorliegende Erfindung zwischen 0,01 und 0,4 mm betragen. In ihren Untersuchungen zu den strukturellen Änderungen und mechanischen Eigenschaften von gezogenen Cellulosefilmen ermittelten GINDL et al. (2006) für die rohen, nicht weiter behandelten Filme einen E-Modul von ca. 10 GPa, eine Zugfestigkeit von 201 MPa und eine Bruchdehnung von 19,6%. Sie zeigen außerdem, dass sich Festigkeit und Steifigkeit der Cellulosefilme durch Ziehen in feuchtem Zustand bis auf etwa 400 MPa bzw. 26 GPa steigern lassen. In diesem Fall sinkt jedoch die Bruchdehnung auf einen Wert von ca. 4%.

Verglichen mit Stahl ist der E-Modul der gezogenen Cellulosefilme deutlich geringer, daher kann durch die Verwendung dieser Filme die Längsdehnung des Holzfurniers nicht in gleicher Weise wie durch ein Zugband aus Stahl verhindert werden. Aufgrund der im Vergleich zu massiven Biegeteilen wesentlich geringeren Dicke der Furniere sind die Verhältnisse aber nicht direkt mit dem Thonet-Verfahren vergleichbar. Mit zunehmender Dehnung des Cellulosefilms muss sich auch das angrenzende Holz um den entsprechenden Betrag dehnen. Limitierender Faktor ist hier, wie bereits erwähnt, die geringe Bruchdehnung des Holzes bei Zugbeanspruchung. So beträgt nach KOLLMANN (1955) die Bruchdehnung eines ungedämpften, lufttrockenen Rotbuchenfurniers bei Zugbeanspruchung in Längsrichtung etwa 0,75-1,0%, bei gedämpften Furnieren 1,5-2,0%. Bei Maserfurnieren ist die Bruchdehnung unter anderem von der Herstellungs- bzw. Schnittrichtung abhängig. BUCHELT und WAGENFÜHR (2007) ermittelten für das im exklusiven Automobilbau häufig verwendete Wurzelmaserfurnier vom Nussbaum (*Juglans nigra* L.) im Zugversuch eine Bruchdehnung von 0,72% (parallel zur Schnittrichtung) bzw. 0,57% (senkrecht zur Schnittrichtung). Es gilt daher, die Dehnung der Furniere auf die o.g. Werte zu begrenzen, was erfindungsgemäß durch eine hohe Steifigkeit der verwendeten Cellulosefilme erreicht werden kann. Das zuvor beschriebene Verfahren stellt nur eine Möglichkeit der Herstellung solcher Filme dar. Vergleichbare Cellulosefilme lassen sich auch auf anderem Wege herstellen. Wichtig ist, dass diese eine entsprechend hohe Steifigkeit aufweisen.

Nach dem Trocknen der Cellulosefilme werden sie auf die Holzfurniere aufgeklebt und so ein Verbund aus Holz und Cellulose erzeugt. Die Verklebung kann vollflächig sein, oder es werden nur die besonders kritischen Bereiche, wie Ecken, Kanten oder Profilierungen mit dem Cellulosefilm kaschiert. Zum Einsatz kommen bevorzugt Klebstoffe oder Laminierharze auf Epoxid- oder Polyesterbasis. Die Filme werden mit dem Klebstoff bestrichen und anschließend in einer Heißpresse mit dem Furnier verklebt. Das Festlegen der Pressparameter erfolgt sinnvoller Weise in Abhängigkeit des verwendeten Klebstoffes. Bei Epoxidharz haben sich ein Pressdruck von etwa 1 MPa und eine Presstemperatur von 80 °C als zweckmäßig erwiesen. Die Presszeit beträgt hier in der Regel nur wenige Minuten. Bereits bei mäßigem Klebstoffauftrag kommt es zu einer vollständigen Durchtränkung des dünnen Cellulosefilms, der nach dem Aushärten des Harzes nahezu transparent erscheint. Die Holzoberfläche bekommt das Aussehen einer lackierten Oberfläche, die Holzmaserung bleibt jedoch vollständig sichtbar, es tritt keine Trübung auf.

Aus dem cellulosekaschierten Furnier lassen sich nun ebene Zuschnitte entsprechend der Form der zu beschichtenden Werkstücke herstellen. Das eigentliche Biegen der Furniere kann bevorzugt in heißem Zustand erfolgen, darüber hinaus können die Furniere befeuchtet werden. Durch die Hitze wird das Holz plastischer und es lassen sich größere Verformungsverhältnisse (d/r) erzielen. Nach PECINA (1985) setzt die Ligninerweichung im Holz im Allgemeinen erst ab einer Temperatur von etwa 80 °C ein, sodass dieser Wert eine sinnvolle Untergrenze darstellt. Die Obergrenze der Biegetemperatur liegt bei zirka 140 °C, da hier die Zerstörung des Holzes beginnt und bei noch höheren Temperaturen häufig Verfärbungen der wertvollen Furniere auftreten. Die Temperatur während des Biegevorgangs sollte vorzugsweise zwischen 100 und 120 °C betragen.

Die erhitzten Holzfurniere werden anschließend in einer beheizten und der Gestalt des herzustellenden Werkstückes angepassten Pressform mit dem Trägermaterial (z.B. Faserverbundformteile, etc.) verklebt. Das Biegen des cellulosekaschierten Furniers und das Aufbringen desselben auf das Werkstück erfolgen daher in einem Arbeitsgang. Sobald der Klebstoff eine ausreichende Festigkeit erreicht hat um ein Rückfedern des gebogenen Furniers zu verhindern, kann die Form geöffnet und das fertig furnierte Werkstück entnommen werden. Da das kaschierte Furnier unmittelbar nach dem Umformen in der Presse fix mit dem Werkstück verbunden wird, ist ein weiteres Stabilisieren des Biegeteils in der Form nicht erforderlich. Sofern der nachfolgende Oberflächenaufbau (Grundierung, Zwischen- und Decklackierung, etc.) es erlaubt, kann der aufgeklebte Cellulosefilm nach dem Umformprozess auf der Furnieroberfläche verbleiben. In diesem Fall können die Filmeigenschaften durch entsprechende Additive (Brandschutzmittel, Farbpigmente, UV-Absorber, organische oder anorganische Füllstoffe, etc.) gezielt verbessert werden und es lassen sich so beispielsweise auch besonders harte und kratzfeste Oberflächen erzielen. Die Additivzugabe ist während der Herstellung der Cellulosefilme zumeist problemlos möglich. Sollten, wie etwa bei Hochglanzoberflächen von Armaturenbrettern im Automobilbau, besonders hohe Anforderungen an die optische Qualität der Oberfläche gestellt werden, so kann der Verstärkungsfilm durch Schleifen entfernt werden. Danach sind die meisten üblichen Oberflächenbehandlungsverfahren anwendbar.

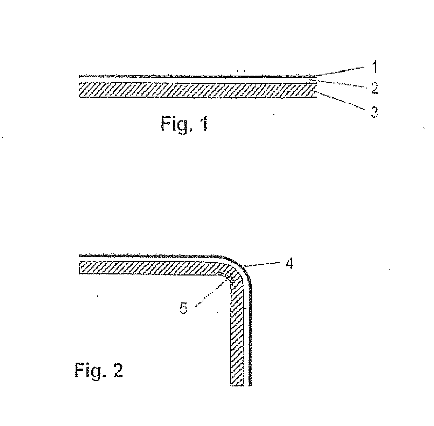

Die Erfindung ist beispielhaft in zwei schematischen Zeichnungen (Fig. 1 und Fig. 2) dargestellt.

Fig. 1 zeigt den Aufbau des Holz-Cellulose-Verbundwerkstoffs bei dem ein Furnier 3 schubsteif mittels Klebstoff 2 mit einem Cellulosefilm 1 verklebt ist. Bei dem Umformungsverfahren unter Hitzeeinwirkung werden Holzbestandteile (Lignin) erweicht. Beim Biegen des Verbundes um einen engen Radius (Fig. 2) wird auf der Außenseite die Dehnung durch den Cellulosefilm stark begrenzt und damit eine Rissbildung im Furnier verhindert. Aufgrund der Versteifung des Furniers auf der Außenseite der Biegelinie, kommt es zu einer Verschiebung der "Neutralen Faser" wodurch Zugkräfte im Biegebereich 4 vorrangig durch den Cellulosefilm aufgenommen werden. Auf der Innenseite kommt es zu einem Komprimieren oder Stauchen der Holzfasern 5.

Das nachfolgend angeführte Anwendungsbeispiel soll der näheren Erläuterung der Erfindung dienen.

### Anwendungsbeispiel:

Ein etwa 0,40 mm dickes Ahorn-Furnier (*Acer* sp.) wurde mit einem Cellulosefilm beschichtet. Als Rohmaterial für die Herstellung des Cellulosefilms dienten handelsübliche Lyocell-Fasern mit einer Feinheit von etwa 1,3 dtex. Diese wurden zunächst für 6 Stunden in destilliertem Wasser gequollen und anschließend entwässert, indem sie nacheinander für je 4 Stunden in Ethanol, Aceton und N,N-Dimethylacetamid (DMAc) verblieben. Da die Cellulose in den verwendeten Entwässerungsmitteln unlöslich ist und sich nach einiger Zeit am Boden des Gefäßes absetzte, konnte die dehydratisierte Cellulose auf einfache Weise vom DMAc getrennt werden. Im Anschluss wurde eine Lösung aus 8 g Lithiumchlorid (LiCl) in 100 ml DMAc vorbereitet. Um die Cellulose aufzulösen, wurden 2 g Cellulosefasern mit 100 ml der LiCl/DMAc-Lösung versetzt. Unter ständigem Rühren kam es nach einiger Zeit (etwa 10 min) zum vollständigen Auflösen der Cellulose. Die Lösung wurde dann in Petrischalen gegossen und für 12 Stunden bei Raumtemperatur stehen gelassen. Während dieses Zeitraums nimmt die dehydratisierte Cellulose Feuchtigkeit aus der Umgebungsluft auf, was zu einem Ausfallen der Cellulose aus der Lösung und zur Bildung einer transparenten Gel-Schicht führt. Diese gelatinösen Cellulosefilme wurden anschließend mit destilliertem Wasser gewaschen und bei Raumtemperatur unter Anwendung eines mäßigen Pressdruckes zwischen zwei Papierlagen getrocknet. Der trockene Cellulosefilm wies eine Dicke von 0,10 mm und ein Flächengewicht von ca. 140 gm⁻² auf.

Für das Verkleben des Cellulosefilms mit einem Furnier wurde ein hochviskoser und schnell härtender Epoxidharz-Klebstoff verwendet. Die Filme wurden in einer Heißpresse bei 80 °C und einem Druck von 1 MPa mit dem Furnier verpresst. Die Presszeit betrug 10 Minuten. Nach dem Abkühlen wurden die kaschierten Furniere durch das Aufsprühen von Wasser befeuchtet und in einer Pressform heiß gebogen. Es standen mehrere Pressformen zur Verfügung, die das Biegen einer abgerundeten Kante (Rundungsradien 2, 3, 5 und 8 mm) mit einem Winkel von 80 Grad erlaubten. Sowohl das Furnier als auch die beiden Teile der Pressform (Form und die entsprechende Gegenform) waren dabei auf etwa 80 °C temperiert. Trotz der niedrigen Biegetemperatur konnte sowohl bei Verlauf der Biegekante in Faserrichtung des Holzes als auch quer dazu ein Biegeradius von 2 mm erreicht werden, ohne dass sichtbare Risse an der Zugseite des Furniers (Außenseite) auftraten. Mit dem erfindungsgemäßen Verbundwerkstoff lässt sich somit bei einem zweidimensionalen Biegevorgang ein Verhältnis von d/r von 1/5 erreichen, ohne dass das verwendete Holzfurnier einer konventionellen Vorbehandlung (z.B. Dämpfen) unterzogen wurde.

Zusammenfassend kann ein Ausführungsbeispiel der Erfindung wie folgt beschrieben werden:
Beschrieben wird ein Holzfurnier, welches durch die Beschichtung mit einem Cellulosefilm auch um kleine Biegeradien rissfrei gebogen werden kann, sowie Verfahren zur Herstellung eines solchen Werkstoffes. Das Furnier ist vorzugsweise ein wertvolles Laubholzfurnier mit einer Dicke zwischen 0,2 und 1,5 mm. Ein hochfester und transparenter Cellulosefilm, dessen Dicke 0,01-0,4 mm beträgt, wird mit Hilfe eines Klebstoffes (vorzugsweise auf Basis von Epoxid- oder Polyesterharz) auf das Furnier aufgeklebt und so schubsteif mit diesem verbunden. Durch die Verbindung des Cellulosefilms mit dem Holzfurnier entsteht ein Verbundwerkstoff, welcher anschließend in einem Arbeitsschritt zwei- oder drei-dimensional gebogen und auf ein Trägermaterial aufgeleimt werden kann. Da der Cellulosefilm aufgrund seiner hohen Festigkeit und
Steifigkeit als Zugband wirkt, behindert dieser die Verlängerung des Holzes auf der auf Zug beanspruchten Seite. Rissbildungen an der Außenseite des Biegeteils werden dadurch verhindert. Der erfindungsgemäße Verbundwerkstoff eignet sich somit auch zum Furnieren kritischer (z.B. stark gekrümmter) Werkstücke.

### Literatur

Bariska, M. (1974): Physikalische und physikalisch-chemische Änderungen im Holz während und nach der Ammoniak-Behandlung. Zürich: Habilitationsschrift. ETHZ.

Buchelt, B.; Wagenführ, A. (2007): Untersuchungen zur Anisotropie der mechanischen Eigenschaften von Nussbaummaserfurnier (Juglans nigra L.). Holz als Roh- und Werkstoff 65, 407 - 409.

Gindl, W.; Martinschitz, K.J.; Boesecke, P.; Keckes, J. (2006): Changes in the Molecular Orientation and Tensile Properties of Uniaxially Drawn Cellulose Films. Biomacromolecules 7, 3146 - 3150.

Kollmann, F. (1936): Technologie des Holzes und der Holzwerkstoffe. 1. Aufl., Berlin: Springer.

Kollmann, F. (1955): Technologie des Holzes und der Holzwerkstoffe. Bd.2 - Holzschutz, Oberflächenbehandlung, Trocknung und Dämpfen, Veredelung, Holzwerkstoffe, spanabhebende und spanlose Holzbearbeitung, Holzverbindungen. 2., neu bearbeitete und erweiterte Aufl., Berlin, Göttingen, Heidelberg: Springer.

Pecina, H. (1985): Betrachtungen über die natürliche Faserbindung in lignocellulosen Stoffen und die Möglichkeiten ihrer Beeinflussung im Prozess der Werkstoffherstellung. Dresden: Habilitationsschrift (Dissertation B). TU Dresden.

Schutzrecht DE 43 05 611 A1 (1994-08-25), Kellermann, A.: Verfahren zur Herstellung eines furnierten und gebogenen Verkleidungsteiles aus einem Holz/Metall-Laminat, insbesondere eines Innenausbauteiles von Kraftfahrzeugen.

Schutzrecht EP 0 094 651 A2 (1983-11-23), Homanner, A.; Zimmermann, W.: Schichtwerkstoff auf Basis eines Holzfurniers.

Schutzrecht US 3,282,813 (1966-11-01), Schuerch, C.: Method of forming wood and formed wood product.

Schutzrecht US 3,423,276 (1969-01-21), Eckenroth, C.J.: Decorative covering for dashboard panels and method of applying same.

Schutzrecht US 5,264,062 (1993-07-06), Ohsumi, H.; Takeshi, M.; Shinji, K.; Mitsuo, I.; Shoichi, K.: Production method for composite molded article.

Wagenführ, A.; Buchelt, B.; Pfriem, A. (2006): Material behaviour of veneer during multidimensional moulding. Holz als Roh- und Werkstoff 64, 83 - 89.

## Patentansprüche

1. Verbundwerkstoff auf Basis eines Holzfurniers (3), **dadurch gekennzeichnet, dass** das Holzfurnier (3) mit einer Schichtstärke von 0,2 bis 1,5 mm mindestens einseitig mittels eines Klebstoffes (2) mit einem reißfesten Film (1) verbunden ist.

2. Verbundwerkstoff nach Anspruch 1, **dadurch gekennzeichnet, dass** der Film (1) aus Cellulose bzw. Cellulosefasern besteht und eine Dicke von 0,01 bis 0,4 mm aufweist.

3. Verbundwerkstoff nach Anspruch 1 oder 2, **dadurch gekennzeichnet, dass** der Film (1), insbesondere der Cellulosefilm, vollflächig mit Epoxid-, Polyester- oder anderen Klebharzen oder Klebstoffen (2) schubsteif mit dem Holzfurnier (3) verbunden ist.

4. Verbundwerkstoff nach Anspruch 2 oder 3, **dadurch gekennzeichnet, dass** der Cellulosefilm (1) durch Zugabe von Additiven, wie UV-Absorber, Farbpigmente, Füllstoffe oder Brandschutzmittel, vergütet ist.

5. Verbundwerkstoff nach einem der Ansprüche 2 bis 4, **dadurch gekennzeichnet, dass** der Cellulosefilm (1) von Natur aus oder durch die Tränkung mit Harzen oder Klebstoffen transparent ist.

6. Verfahren zum Herstellen eines Verbundwerkstoffs nach einem der Ansprüche 1 bis 5 durch das Verbinden eines Holzfurniers (3) mit einem steifen, hoch reißfesten Film (1), **dadurch gekennzeichnet, dass** das Holzfurnier (3) mit einer Stärke von 0,2 bis 1,5 mm mindestens einseitig mit einem Cellulosefilm (1), dessen Dicke zwischen 0,01 und 0,4 mm liegt, verbunden wird.

7. Verfahren zum Herstellen nach Anspruch 6, **dadurch gekennzeichnet, dass** ein Cellulosefilm (1) verwendet wird, der aus handels-üblichen Lyocell-Fasern durch Quellen in Wasser und durch Entwässerung in Ethanol, Aceton und N,N-Dimethylacetamid (DMAc), sowie durch Auflösen der Cellulose in DMAc/Lithiumchlorid, oder nach einem beliebigen anderen Verfahren in gewünschter Schichtstärke hergestellt ist.

8. Verfahren zum Umformen des Verbundwerkstoffs nach einem der Ansprüche 1 bis 5 durch Erhitzen des gesamten Verbundwerkstoffes oder Erhitzen des Holzfurniers (3) in einer Pressform.

9. Verfahren zum Umformen des Verbundwerkstoffs nach einem der Ansprüche 1 bis 5 durch Einpressen oder Anschmiegen des Verbundwerkstoffs in eine einseitig oder zweiseitig erhitzte Pressform oder an einen erhitzten Formteil.

10. Verwendung des Verbundwerkstoffs nach einem der Ansprüche 1 bis 5 zum Furnieren von ebenen oder zwei- bzw. drei-dimensional geformten Gegenständen aus Metall, Kunststoff, Vollholz oder Holzwerkstoffen.

11. Verfahren zum Herstellen eines flächigen oder mehrdimensional geformten Verbundwerkstoffs nach einem der Ansprüche 1 bis 5 durch das Verbinden eines Holzfurniers (3) mit einem steifen, hoch reißfesten Film (1), **dadurch gekennzeichnet, dass** die Verklebung der Komponenten Holzfurnier (3) und Film (1) sowie das Umformen des Verbundwerkstoffs bzw. das Aufkaschieren des Verbundes auf ein Trägermaterial in einem Arbeitsgang erfolgt.
